(19) Europäisches Patentamt
European Patent Office
Office européen des brevets

(11) **EP 1 548 991 B1**

(12) **EUROPÄISCHE PATENTSCHRIFT**

(45) Veröffentlichungstag und Bekanntmachung des Hinweises auf die Patenterteilung:
**04.04.2007 Patentblatt 2007/14**

(51) Int Cl.:
*H04L 12/40* *(2006.01)*

(21) Anmeldenummer: **04030274.7**

(22) Anmeldetag: **21.12.2004**

(54) **Transformatorische Busankopplung**

Transforming bus connection

Couplage de bus transformateur

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **23.12.2003 DE 10360857**

(43) Veröffentlichungstag der Anmeldung:
**29.06.2005 Patentblatt 2005/26**

(73) Patentinhaber: **Airbus Deutschland GmbH**
**21129 Hamburg (DE)**

(72) Erfinder: **Rieckmann, Norbert**
**22549 Hamburg (DE)**

(74) Vertreter: **Maiwald Patentanwalts GmbH**
**Elisenhof,**
**Elisenstrasse 3**
**80335 München (DE)**

(56) Entgegenhaltungen:
**EP-A- 0 467 163        DE-A1- 19 640 172**
**US-B1- 6 327 309**

**Beschreibung**

Die vorliegende Erfindung betrifft einen Datenbus, vorzugsweise für ein Flugzeug. Insbesondere betrifft die vorliegende Erfindung ein Datenbussystem mit einem Datenbus und einem Terminal, ein Terminal zum Anschluss und Betrieb mit einem Datenbus sowie ein Datenübertragungsverfahren, um Daten zwischen einem Datenbus und einem Terminal zu übertragen.

Gegenwärtig werden in transformatorisch gekoppelten linearen Datenbussystemen in der Luftfahrt mit getrennter Sende- und Empfangsleitung zwei Transformatoren verwendet, um den Datenbus an das Terminal und umgekehrt zu koppeln. Terminals können beispielsweise Flugzeugsysteme, Geräte oder Sensoren sein. Die transformatorische Kopplung ist in sicherheitskritischen Systemen notwendig, um die erforderliche Störsicherheit zu erreichen. Das bekannte Schlagwort diesbezüglich ist galvanische Trennung von Datenbus und Terminal. Beispielsweise sind solche Datenbussysteme in der ARINC 629 Specification MIL-STD 1553 Specification beschrieben.

In nachteiliger Art und Weise wird jedoch der Signalpegel auf den Datenbus durch jeden bzw. durch jeden weiteren Transformator gedämpft, da jeder einzelne Transformator Reflexionen erzeugt, die das Nutzsignal verformen. Des Weiteren ist der Einsatz von Transformatoren teuer. Überdies stellen bei einer großen Anzahl von Terminals die Transformatoren ein relativ großes Gewicht dar.

Eine direkte Nutzung eines Transformators für Sende- und Empfangskanal durch Parallelschaltung der beiden Stichleitungen, die die Busleitungen mit dem Terminal verbinden, ist nicht empfehlenswert, da einmal der empfindliche Eingangskreis des Empfängers in dem Terminal durch die hohe Leistung des Senders überlastet werden kann und andererseits ein möglicher Kurzschluss im Empfänger des Terminals den Sender dieses Terminals blockiert.

Aus der DE 196 40 172 A1 ist eine Übertrager-Leitungsankopplung bekannt, bei der zur Ankopplung eines Teilnehmers zwischen die Adern einer Übertragungsleitung eine Serienschaltung aus den Wicklungen von mindestens zwei Übertragern angeschlossen ist.

Aus der EP 0 467 163 A1 ist ein hybrider Schaltkreis bekannt, der eine digitale Ausgleichsvorrichtung zum Auslöschen eines Echos aufweist, welches über eine Echo Rückkehrroute weitergegeben wird.

Es ist eine Aufgabe der vorliegenden Erfindung, ein verbessertes Datenbussystem anzugeben.

Gemäß einem Ausführungsbeispiel der vorliegenden Erfindung wird die obige Aufgabe mittels eines Datenbussystems nach Anspruch 1 gelöst. Dieses Datenbussystem weist einen Datenbus und ein Terminal auf, wobei der Datenbus eine erste und eine zweite Datenleitung aufweist. Das Terminal ist über einen Richtkoppler mit der zweiten Datenleitung verbunden, um Daten über den Datenbus zu senden und zu empfangen.

Die erfindungsgemäße Verwendung des Richtkopplers ermöglicht in vorteilhafter Art und Weise die Verwendung nunmehr eines Transformators, um ein Terminal an den Datenbus mit den Busleitungen zu koppeln. Vorteilhaft können dadurch Reflexionen verringert werden, die durch Transformatoren bedingt werden. Dies verbessert den Signalpegel auf den Datenleitungen des Datenbusses. Außerdem wird dadurch ein kostengünstiges Datenbussystem zur Verfügung gestellt.

Gemäß einem weiteren Ausführungsbeispiel der vorliegenden Erfindung weist das Terminal einen Sender und einen Empfänger auf. Der Empfänger wird durch den Richtkoppler von dem Sender getrennt. Auf diese Art und Weise wird ein Einstreuen von störenden Sendesignalen in den Empfänger vermieden.

Gemäß einem weiteren Ausführungsbeispiel der vorliegenden Erfindung ist der Richtkoppler derart ausgestaltet, dass ein von der Busleitung kommendes Eingangssignal an den Sender und den Empfänger weitergeleitet wird, wobei ein von dem Sender an den Datenbus gehendes Ausgangssignal an den Datenbus weitergegeben wird, nicht aber an den Empfänger.

Gemäß einem weiteren Ausführungsbeispiel der vorliegenden Erfindung ist der Richtkoppler derart ausgestaltet, dass bei Nichtsenden der Sender die Eingangsimpedanz, die dem Datenbus zuweist, angepasst ist, so dass auf dem Datenbus keine Reflexionen entstehen. Dadurch werden auf dem Datenbus keine Reflexionen erzeugt, die das Nutzsignal verformen.

Gemäß einem Ausführungsbeispiel der vorliegenden Erfindung ist in dem Richtkoppler lediglich ein Transformator vorgesehen, der im Wesentlichen ein Windungsverhältnis der Primärspule zur Sekundärspule von 1,141 zu 2 x 1,0 aufweist. In anderen Worten bedeutet dies, dass dieser Transformator eine Primärspule aufweist und zwei Sekundärspulen.

Gemäß einem weiteren Ausführungsbeispiel der vorliegenden Erfindung ist das Datenbussystem auf die Bedürfnisse in einem Flugzeug angepasst. Insbesondere ist das erfindungsgemäße Datenbussystem dadurch vorteilhaft für ein Flugzeug, da es ein geringes Gewicht aufweist, jedoch durch die galvanische Trennung von Datenbus und Terminal die erforderliche Störsicherheit erreicht. Beispielsweise kann das Terminal ein Flugzeugsystem oder ein Teil eines Flugzeugsystems sein.

Gemäß einem weiteren Ausführungsbeispiel der vorliegenden Erfindung wird ein Terminal zum Anschluss und Betrieb mit einem Datenbus angegeben, wobei das Terminal einen Richtkoppler aufweist, um eine Datenverbindung von und zu den Busleitungen des Datenbusses zu bilden. Es ist an dieser Stelle anzumerken, dass statt zwei Busleitungen auch eine Vielzahl von Busleitungen vorgesehen sein kann. Auch ist es möglich, nur eine Busleitung vorzusehen. Vorteilhaft weist dieses Terminal eine hohe Störsicherheit auf. Damit ist dieses Terminal insbesondere für sicherheitskritische Systeme, beispielsweise in einem Flugzeug, besonders geeignet.

Gemäß einem weiteren Ausführungsbeispiel der vorliegenden Erfindung wird ein Datenübertragungsverfahren angegeben, um Daten zwischen einem Datenbus und einem Terminal zu übertragen. Das Datenübertragungsverfahren weist den Schritt des Verbindens der ersten und zweiten Datenleitung des Datenbusses mit dem Terminal mittels eines Richtkopplers auf, um Daten über den Datenbus zu senden und zu empfangen. In vorteilhafter Art und Weise wird ein einfaches, robustes Datenübertragungsverfahren zur Verfügung gestellt.

Weitere vorteilhafte Ausführungsbeispiele der vorliegenden Erfindung ergeben sich aus den Unteransprüchen.

Im Folgenden werden Ausführungsbeispiele der vorliegenden Erfindung unter Bezugnahme auf die begleitenden Figuren beschrieben.

Fig. 1    zeigt ein vereinfachtes Prinzipschaltbild eines ersten Ausführungsbeispiels eines Datenbussystems gemäß der vorliegenden Erfindung, wobei der Signalfluss mit $T_X$-Modus dargestellt ist;

Fig. 2    zeigt ein vereinfachtes Prinzipschaltbild des ersten Ausführungsbeispiels des Datenbussystems von Fig. 1, wobei der Signalfluss im $R_X$-Modus dargestellt ist; und

Fig. 3    zeigt ein vereinfachtes Blockschaltbild eines zweiten Ausführungsbeispiels eines Datenbussystems gemäß der vorliegenden Erfindung.

Im Folgenden wird mit Verweis auf ein Datenbussystem, das vorzugsweise in einem Flugzeug einsetzbar ist, die vorliegende Erfindung detaillierter beschrieben. Es ist jedoch darauf hinzuweisen, dass die vorliegende Erfindung nicht auf die Anwendung in einem Flugzeug beschränkt ist, sondern auch in anderen allgemeinen Datenbussystemen Anwendung finden kann.

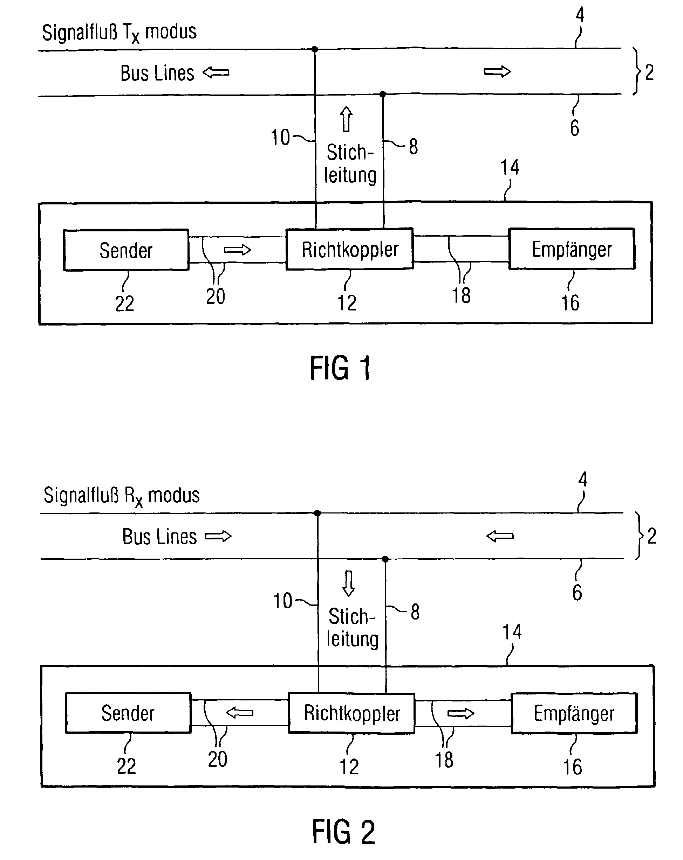

Fig. 1 zeigt ein vereinfachtes Prinzipschaltbild eines ersten Ausführungsbeispiels eines Datenbussystems gemäß der vorliegenden Erfindung, wobei der Signalfluss im $T_X$-Modus dargestellt ist. Wie Fig. 1 zu entnehmen ist, weist der Datenbus 2 zwei Datenbusleitungen 4 und 6 auf. Die Datenbusleitungen 4 und 6 sind mittels Stichleitungen 8 und 10 mit dem Terminal 14 verbunden. Insbesondere sind die Stichleitungen 8 und 10 mit einem Richtkoppler 12 verbunden, der auf der einen Seite über die Leitungen 18 mit einem Empfänger 16 des Terminals 14 verbunden ist und auf der anderen Seite über die Leitungen 20 mit einem Sender 22 des Terminals.

Die grau dargestellten Pfeile sollten den Signalfluss im $T_X$(Sende-)Modus an. Wie Fig. 1 zu entnehmen ist, wird vom Sender 22 ein Signal über die Leitung 20 an den Richtkoppler 12 gesendet. Der Richtkoppler 12 leitet dieses Signal nicht an den Empfänger 16 weiter. Jedoch leitet der Richtkoppler 12 das von dem Sender 22 gesendete Signal über die Stichleitungen 8 und 12 an die Busleitungen 4 und 6 des Datenbusses weiter, wo das Signal auch weiter verbreitet wird.

Fig. 2 zeigt ein vereinfachtes Prinzipschaltbild des ersten Ausführungsbeispiels des Datenbussystems von Fig. 1, wobei der Signalfluss in $R_X$(Empfangs-)Modus dargestellt ist. Sendemodus bedeutet, dass das entsprechende Terminal Daten über den Datenbus an ein anderes Terminal sendet. Empfangsmodus bedeutet, dass das Terminal über den Datenbus Daten empfängt.

Wie Fig. 2 zu entnehmen ist, werden eingehende Daten von dem Datenbus 2 über die Stichleitungen 8 oder 10 an den Richtkoppler 12 weitergegeben, der die Daten sowohl an den Sender 22 über die Leitungen 20 als auch über die Leitungen 18 und den Empfänger 16 weiterleitet.

Somit wird, wie Fig. 1 und 2 zu entnehmen ist, durch den Richtkoppler 12 der Empfänger 16 von dem Sender 22 getrennt. Wenn der Sender 22 nicht sendet, ist die Eingangsimpedanz des Richtkopplers angepasst, so dass auf den Busleitungen 4 und 6 keine Reflexionen auftreten, die das Bussignal bzw. den Empfänger stören könnten. Vorzugsweise ermöglicht dies einen sicheren und verbesserten Betrieb des Datenbussystems.

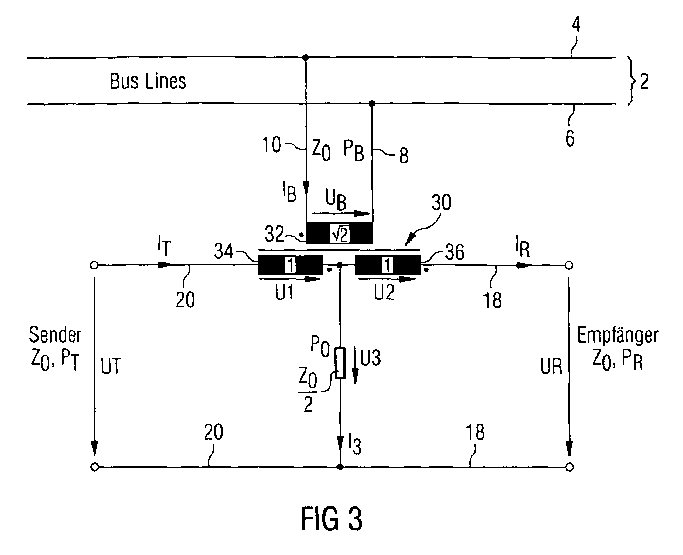

Fig. 3 zeigt ein vereinfachtes Schaltungsdiagramm eines zweiten Ausführungsbeispiels eines Datenbussystems gemäß der vorliegenden Erfindung. In Fig. 3 werden für gleiche oder sich entsprechende Elemente die gleichen Bezugszeichen wie in den Fig. 1 und 2 verwendet. Der Einfachheit halber sind in Fig. 3 der Sender und der Empfänger nicht dargestellt, lediglich die Leitungen 18 und 20, die jeweils zum Empfänger und Sender gehen.

Wie Fig. 3 zu entnehmen ist, ist zwischen dem Datenbus 2 mit den Datenbusleitungen 4 und 6 den Transformator 30 angeordnet. Der Transformator 30 weist eine Primärspule 32 und zwei Sekundärspulen 34 und 36 auf. Die Sekundärspulen weisen jeweils die gleiche Anzahl von Windungen auf. Der Transformator 30 hat im Wesentlichen ein Windungsverhältnis von Primärspule zu Sekundärspule von 1,141 zu 2 x 1,000 ($\sqrt{2}$ zu 2 x 1). Daraus ergeben sich mit den Impedanzen $Z_0$ für den Senderausgang in Ruhe und den Empfängerausgang in Ruhe folgende Spannungen und Ströme.

$$U_T = I_T \cdot Z_0$$

$$I_B = \frac{1}{\sqrt{2}} I_T$$

$$U_B = I_B \cdot Z_0 = \frac{1}{\sqrt{2}} U_T$$

$$P_B = U_B \cdot I_B = \frac{1}{\sqrt{2}} U_T \cdot \frac{1}{\sqrt{2}} I_T = \frac{1}{2} P_T$$

$$U_1 = U_2 = \frac{1}{\sqrt{2}} U_B = \frac{1}{2} U_T$$

$$\Rightarrow \cdots U_R = U_T - U_1 - U_2 = 0$$

$$\Rightarrow \cdots P_R = 0$$
*(Leistung am Empfängereingang)*

$$U_3 = U_T - U_1 = \frac{1}{2} U_T$$

$$P_L = U_3 \cdot I_3 = U_3 \cdot \frac{U_3}{0.5 \cdot Z_0} = U_3 \cdot \frac{2 \cdot U_3}{Z_0} = U_3 \cdot \frac{U_T}{Z_0} = U_3 \cdot I_T = \frac{1}{2} U_T \cdot I_T = \frac{1}{2} P_T$$
*(Auf den Bus übertragene Leistung)*

$$U_B = I_B \cdot Z_0$$

$$P_B = U_B \cdot I_B = Z_0 \cdot I_B^2$$

$$U_1 = U_2 = \frac{1}{\sqrt{2}} U_B$$

$$I_1 = I_2 = \frac{1}{\sqrt{2}} I_B$$

$$I_3 = I_R - I_T = 0$$

$$\cdots \Rightarrow P_L = 0$$

$$U_R = I_R \cdot Z_0$$

$$P_R = U_R \cdot I_R = Z_0 \cdot I_R^2 = \frac{1}{2} Z_0 \cdot I_B^2 = \frac{1}{2} P_B$$
*(empfangene Leistung)*

$$P_T = U_T \cdot I_T = Z_0 \cdot I_T^2 = \frac{1}{2} P_B$$
*(Leistungsanteil am inaktiven Senderausgang)*

Wobei, wie Fig. 1 zu entnehmen ist, der Strom $I_B$ der Strom in die Primärspule 32 ist und die Spannung $U_B$ die Spannung über die Primärspule ist. $P_B$ ist die einfließende Busleistung. Der Strom $I_T$ ist der von dem Sender mit der Impedanz $Z_0$ mit der Leistung $P_T$ in die Sekundärspule 34 fließende Strom, wobei die Spannung über die Sekundärspule 34 mit $U_1$ bezeichnet ist. Der Strom $I_R$ ist der in den Empfänger fließende Strom, wobei der Empfänger eine Impedanz

von $Z_0$ und eine Empfangsleistung von $P_R$ aufweist. Die Spannung über die Sekundärspule 36 ist mit $U_2$ bezeichnet. $I_3$ bezeichnet im Ersatzschaltbild den Strom, der durch die Impedanz $Z_0/2$ fließt, die zwischen den Sekundärspulen 34 und 36und einem Sender- und Empfängereingang geschaltet ist. $P_0$ bezeichnet die Leistung über $Z_0/2$ und $U_3$ bezeichnet die Spannung darüber. Die Spannung $U_T$ bezeichnet die Eingangsspannung des Senders und die Spannung $U_R$ bezeichnet die Eingangsspannung des Empfängers.

Wie der obigen Beschreibung zu entnehmen ist, ermöglicht die vorliegende Erfindung eine Halbierung der Anzahl von Kopplungstransformatoren, die zur galvanischen Trennung von Datenbus und Terminal erforderlich sind im Vergleich zu dem bekannten Datenbussystemen. Dadurch werden die Kosten für Koppeltransformatoren halbiert, d.h. ein günstiges Datenbussystem zur Verfügung gestellt. Überdies wird die Signalverzerrung auf dem Datenbus durch Reflexionen deutlich verringert.

**Patentansprüche**

1. Datenbussystem mit einem Datenbus und einem Terminal,
   wobei der Datenbus (2) eine erste (4) und eine zweite (6) Datenleitung aufweist, und
   wobei das Terminal (14) über einen Richtkoppler (12) mit der ersten (4) und der zweiten (6) Datenleitung verbunden ist um Daten über den Datenbus zu senden und zu empfangen;
   wobei der Richtkoppler (2) einen Transformator aufweist, **dadurch gekennzeichnet, dass**
   der Transformator ein Windungsverhältnis von primär $\sqrt{2}$ zu sekundär 2 x 1 aufweist.

2. Datenbussystem nach Anspruch 1,
   wobei das Terminal einen Sender und einen Empfänger aufweist; und
   wobei der Empfänger (16) durch den Richtkoppler (12) von dem Sender (22) getrennt ist.

3. Datenbussystem nach Anspruch 2,
   wobei der Richtkoppler (2) ein von der Busleitung kommendes Eingangssignal an den Sender (22) und den Empfänger (16) weiterleitet, und
   wobei der Richtkoppler ein von dem Sender an den Datenbus gehendes Ausgangssignal an den Datenbus weitergibt, aber nicht an den Empfänger.

4. Datenbussystem nach einem der Ansprüche 1 bis 3,
   wobei der Richtkoppler (12) ausgestaltet ist, dass bei nicht sendendem Sender (22) eine dem Datenbus (2) zuweisende Eingangsimpedanz derart angepasst ist, dass auf dem Datenbus (2) keine Reflexionen auftreten.

5. Datenbussystem nach einem der Ansprüche 1 bis 4,
   wobei der Datenbus (2) als Datenbus für ein Flugzeug ausgestaltet ist; und
   wobei das Terminal (14) ein Flugzeugsystem in dem Flugzeug ist.

6. Terminal zum Anschluss und Betrieb mit einem Datenbus, wobei der Datenbus eine erste und eine zweite Datenleitung aufweist, wobei das Terminal (14) umfasst:

   einen Richtkoppler (12),
   wobei das Terminal (14) mittels des Richtkopplers (12) mit der ersten (4) und der zweiten (6) Datenleitung verbunden ist um Daten über den Datenbus (2) zu senden und zu empfangen.
   wobei der Richtkoppler (12) einen Transformator aufweist, **dadurch gekennzeichnet, dass**
   der Transformator ein Windungsverhältnis von primär $\sqrt{2}$ zu sekundär 2 x 1 aufweist.

7. Terminal nach Anspruch 6,
   wobei das Terminal einen Sender (22) und einen Empfänger (16) aufweist; und
   wobei der Empfänger (16) durch den Richtkoppler (12) von dem Sender (22) getrennt ist.

8. Terminal nach Anspruch 7,
   wobei der Richtkoppler (12) ein von der Busleitung (4, 6) kommendes Eingangssignal an den Sender (22) und den Empfänger (16) weiterleitet, und
   wobei der Richtkoppler (12) ein von dem Sender (22) an den Datenbus (2) gehendes Ausgangssignal an den Datenbus (2) weitergibt, aber nicht an den Empfänger (16).

**9.** Terminal nach Anspruch 6, 7 oder 8,
wobei der Richtkoppler (12) ausgestaltet ist, dass bei nicht sendendem Sender (22) eine dem Datenbus (2) zuweisende Eingangsimpedanz derart angepasst ist, dass auf dem Datenbus (2) keine Reflexionen auftreten.

**10.** Terminal nach einem der Ansprüche 6 bis 9,
wobei das Terminal Teil eines Flugzeugsystems eines Flugzeugs ist.

**11.** Datenübertragungsverfahren um Daten zwischen einem Datenbus und einem Terminal zu übertragen,
wobei der Datenbus eine erste und eine zweite Datenleitung aufweist;
wobei das Verfahren folgenden Schritt aufweist:

Verbinden der ersten und der zweiten Datenleitung mit dem Terminal mittels eines Richtkopplers um Daten über den Datenbus zu senden und zu empfangen;
wobei der Richtkoppler einen Transformator aufweist, **dadurch gekennzeichnet, dass**
der Transformator ein Windungsverhältnis von primär $\sqrt{2}$ zu sekundär 2 x 1 aufweist.

**12.** Verfahren nach Anspruch 11, ferner umfassend die Schritte:

Trennen eines Empfängers und eines Senders eines Terminals mittels eines Richtkopplers, und
Anpassen einer dem Datenbus zuweisende Eingangsimpedanz des Richtkopplers bei nicht sendendem Sender derart, dass auf dem Datenbus keine Reflexionen auftreten.

**13.** Verfahren nach Anspruch 12,
wobei das Verfahren auf einem Datenbus eines Fugzeugs angewendet wird.

**Claims**

**1.** Data bus system having a data bus and a terminal,
wherein the data bus (2) comprises a first (4) and a second (6) data line; and
wherein the terminal (14) is connected via a directional coupler (12) to the first (4) and the second (6) data lines in order to transmit and receive data via the data bus,
wherein the directional coupler (2) comprises a transformer,
**characterized in that**
the transformer has a turn ratio of primary $\sqrt{2}$ to secondary 2x1.

**2.** The data bus system according to claim 1,
wherein the terminal has a transmitter and a receiver; and
wherein the receiver (16) is isolated from the transmitter (22) by the directional coupler (12).

**3.** The data bus system according to claim 2,
wherein the directional coupler (2) relays an input signal coming from the bus line to the transmitter (22) and the receiver (16); and
wherein the directional coupler relays an output signal going from the transmitter to the data bus to the data bus, but not to the receiver.

**4.** The data bus system according to any one of the claims 1 to 3,
wherein the directional coupler (12) is designed that in the event of a non-transmitting transmitter (22), an input impedance facing the data bus (2) is adapted in such a way that no reflections arise on the data bus (2).

**5.** The data bus system according to any one of the claims 1 to 4,
wherein the data bus (2) is designed as a data bus (2) for an aircraft; and
wherein the terminal (14) is an aircraft system in the aircraft.

**6.** Terminal for connection and operation with a data bus, wherein the data bus has a first and a second data lines
wherein the terminal (14) comprises:

a directional coupler (12),

wherein the terminal (14) is connected to the first and the second data lines by using the directional coupler (12) in order to transmit and receive data via the data bus (2),
wherein the directional coupler (12) comprises a transformer,
**characterized in that**
the transformer has a turn ratio of primary $\sqrt{2}$ to secondary 2x1.

7. The terminal according to claim 6,
wherein the terminal has a transmitter (22) and a receiver (16); and
wherein the receiver (16) is isolated from the transmitter (22) by the directional coupler (12).

8. The terminal according to claim 7,
wherein the directional coupler (12) relays an input signal coming from the bus line (4, 6) to the transmitter (22) and the receiver (16); and
wherein the directional coupler (12) relays an output signal going from the transmitter (22) to the data bus (2) to the data bus (2), but not to the receiver (16).

9. The terminal according to claim 6, 7, or 8,
wherein the directional coupler (12) is designed so that in the event of a non-transmitting transmitter (22), an input impedance facing the data bus (2) is adapted in such a way that no reflections arise on the data bus (2).

10. The terminal according to any one of the claims 6 to 9,
wherein the terminal is part of an aircraft system of an aircraft.

11. A data transmission method for transmitting data between a data bus and a terminal,
wherein the data bus has a first and a second data line, the method comprising the following step:

connecting the first and the second data lines to the terminal by using a directional coupler to transmit and receive data via the data bus,
wherein the directional coupler comprises a transformer,
**characterized in that**
the transformer has a turn ratio of primary $\sqrt{2}$ to secondary 2x1.

12. The method according to claim 11, further comprising the following steps:

isolating a receiver and a transmitter of a terminal by using a directional coupler; and
adapting an input impedance of the directional coupler facing the data bus in the event of a non-transmitting transmitter in such a way that no reflections arise on the data bus.

13. The method according to claim 12,
wherein the method is used on a data bus of an aircraft.

**Revendications**

1. Système à bus de données comportant un bus de données et un terminal,
dans lequel le bus de données (2) comporte une première (4) et une seconde (6) lignes de données, et
dans lequel le terminal (14) est relié à la première (4) et à la seconde (6) lignes de données par l'intermédiaire d'un coupleur directionnel (12), afin d'envoyer et de recevoir des données par l'intermédiaire du bus de données ;
dans lequel le coupleur directionnel (2) comporte un transformateur, **caractérisé en ce que** le transformateur présente un rapport de bobinage de primaire $\sqrt{2}$ sur secondaire 2 x 1.

2. Système à bus de données selon la revendication 1,
dans lequel le terminal comporte un émetteur et un récepteur ; et
dans lequel le récepteur (16) est séparé de l'émetteur (22) par le coupleur directionnel (12).

3. Système à bus de données selon la revendication 2,
dans lequel le coupleur directionnel (12) transmet à l'émetteur (22) et au récepteur (16) un signal d'entrée venant de la ligne de bus ; et

dans lequel le coupleur directionnel transmet au bus de données, mais pas au récepteur, un signal de sortie allant de l'émetteur au bus de données.

**4.** Système à bus de données selon l'une des revendications 1 à 3, dans lequel le coupleur directionnel (12) est conçu de façon à ce que, lorsque l'émetteur (22) n'émet pas, une impédance d'entrée orientée vers le bus de données (2) est adaptée de telle façon qu'aucune réflexion ne se produit sur le bus de données (2).

**5.** Système à bus de données selon l'une des revendications 1 à 4, dans lequel le bus de données (2) est réalisé sous la forme d'un bus de données pour un avion ; et dans lequel le terminal (14) est un système d'avion situé dans l'avion.

**6.** Terminal destiné à être raccordé et à fonctionner avec un bus de données, dans lequel le bus de données comporte une première et une seconde lignes de données, dans lequel le terminal (14) comprend:

un coupleur directionnel (12), dans lequel le terminal (14) est relié au moyen du coupleur directionnel (12) à la première (4) et à la seconde (6) lignes de données afin d'envoyer et de recevoir des données par l'intermédiaire du bus de données (2), dans lequel, le coupleur directionnel (12) comporte un transformateur, **caractérisé en ce que** le transformateur présente un rapport de bobinage de primaire $\sqrt{2}$ sur secondaire 2 x 1.

**7.** Terminal selon la revendication 6, dans lequel le terminal comporte un émetteur (22) et un récepteur (16) ; et dans lequel le récepteur (16) est séparé de l'émetteur (22) par le coupleur directionnel (12).

**8.** Terminal selon la revendication 7, dans lequel le coupleur directionnel (12) transmet à l'émetteur (22) et au récepteur (16) un signal d'entrée venant de la ligne de bus (4, 6) ; et dans lequel le coupleur directionnel (12) transmet au bus de données (2), mais pas au récepteur (16), un signal de sortie allant de l'émetteur (22) au bus de données (2).

**9.** Terminal selon la revendication 6, 7 ou 8, dans lequel le coupleur directionnel (12) est conçu de façon à ce que, lorsque l'émetteur (22) n'émet pas, une impédance d'entrée orientée vers le bus de données (2) est adaptée de telle façon qu'aucune réflexion ne se produit sur le bus de données (2).

**10.** Terminal selon l'une des revendications 6 à 9, dans lequel le terminal fait partie d'un système d'avion d'un avion.

**11.** Procédé de transfert de données destiné à transférer des données entre un bus de données et un terminal, dans lequel le bus de données comporte une première et une seconde lignes de données ; dans lequel le procédé comprend les étapes qui consistent à :

relier la première et la seconde lignes de données au terminal, au moyen d'un coupleur directionnel, afin d'envoyer et de recevoir des données par l'intermédiaire du bus de données ; dans lequel, le coupleur directionnel comporte un transformateur, **caractérisé en ce que** le transformateur présente un rapport de bobinage de primaire $\sqrt{2}$ sur secondaire 2 x 1.

**12.** Procédé selon la revendication 11, comprenant par ailleurs les étapes qui consistent à :

séparer un récepteur et un émetteur d'un terminal au moyen d'un coupleur directionnel, et lorsque l'émetteur n'émet pas, adapter une impédance d'entrée du coupleur directionnel, orientée vers le bus de données, de façon à ce qu'aucune réflexion ne se produise sur le bus de données.

**13.** Procédé selon la revendication 12, dans lequel le procédé est utilisé sur un bus de données d'un avion.

Signalfluß T$_X$ modus

4

Bus Lines ⇐                    ⇒        } 2

6

10 — Stich-leitung                ⇧        8

14

| Sender | ⇒ | Richtkoppler | | Empfänger |

22        20        12        18        16

**FIG 1**

Signalfluß R$_X$ modus

4

Bus Lines ⇒                    ⇐        } 2

6

10 — Stich-leitung                ⇩        8

14

| Sender | ⇐ | Richtkoppler | ⇒ | Empfänger |

22        20        12        18        16

**FIG 2**

FIG 3